# EUROPEAN PATENT SPECIFICATION

(11) **EP 4 020 148 B1**
(45) Date of publication and mention of the grant of the patent: **22.10.2025**
(21) Application number: 20216481.0
(22) Date of filing: 22.12.2020
(51) Int. Cl.: G06F 3/048, G06F 3/0481, G06F 3/16, G06F 3/14, G06F 3/01

(54) **OUTPUT OF CONTENT FROM A FIRST DEVICE TO A SECOND DEVICE**
AUSGABE VON INHALT VON EINER ERSTEN VORRICHTUNG ZU EINER ZWEITEN VORRICHTUNG
SORTIE DE CONTENU D'UN PREMIER DISPOSITIF VERS UN SECOND DISPOSITIF

(43) Date of publication of application: 29.06.2022
(73) Proprietor: Nokia Technologies Oy, 02610 Espoo (FI)
(72) Inventor: LEHTINIEMI, Arto, 33880 Lempäälä (FI); LEPPÄNEN, Jussi, 33580 Tampere (FI); MATE, Sujeet Shyamsundar, 33720 Tampere (FI); LAAKSONEN, Lasse Juhani, 33210 Tampere (FI)
(74) Representative: Sayer, Robert David

(56) References cited:
- WO-A2-2019/191082

## Description

### Field

Example embodiments relate to apparatuses, methods and computer programs for moving output of content from a first device to a second device.

### Background

A device having display capabilities, for example a smartphone or tablet computer, may be configured to output a user interface which comprises at least first and second windows associated with respective first and second content. For example, a first window may be associated with a webpage and the second window may be associated with a video clip. The second window may at least partly overly the first window. In some cases, the second window may be smaller in terms of spatial area than the first window and the entirety of the second window may overly the first window. This is sometimes referred to as a picture-in-picture user interface whereby the second window may be referred to as a picture-in-picture window.

Devices configured to provide picture-in-picture user interfaces enable continuity in terms of users being able to simultaneously consume first and the second content without, for example, having to switch between their associated windows. WO2019/191082 discloses a smart video processing system including a plurality of input pipelines.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus according to claim 1 of the appended set of claims.

The second window may be a picture-in-picture window.

The apparatus may be configured to move output of at least part of the first content or at least part of the second content based on detecting that the apparatus does not comprise one or more output capabilities required to output at least part of the first content or at least part of the second content and that the remote device does comprise the one or more required output capabilities.

The apparatus may be configured to move output of either the first window or the second window responsive to detecting that the first window is associated with a predetermined type of application.

The detecting means may be configured to detect receipt of the user input by means of detecting selection of an interactive user interface element on the first window.

The detecting means may be configured to detect receipt of the user input by means of detecting a predetermined movement, gesture or orientation of the apparatus.

The apparatus may further comprise means for determining a distance between the apparatus and the remote device, wherein the apparatus is configured to move output of the first window or the second window responsive to the detecting that the distance is below a predetermined threshold.

The apparatus may further comprise means for determining a gaze direction of a user in relation to the user interface, wherein the apparatus is configured to move output of the first window or the second window responsive to detecting that the determined gaze direction corresponds to the first window and not to the second window.

The apparatus may further comprise means for identifying one or more objects of interest in the first window, wherein the apparatus is configured to move output of the first window or the second window responsive to detecting that the second window at least partly overlies the one or more objects of interest.

The apparatus may further comprise means for identifying one or more interactive user interface elements in the first window, wherein the apparatus is configured to move output of the first window or the second window responsive to detecting that the second window at least partly overlies the one or more interactive user interface elements.

The apparatus may be configured to move output of the first window or the second window responsive to detecting that the second window is associated with a predetermined type of application or comprises a predetermined type of content for being output in an enlarged or full-screen mode.

The apparatus may be configured to determine which of the first content or the second content to move output of based on predetermined user preference data or a received user interaction.

The apparatus may be configured to determine which of the first content or the second content to move output of based on determining one or more output capabilities of the remote device and identifying which of the first content or the second content has output preferences or output requirements most closely corresponding to the determined one or more output capabilities.

The apparatus may further comprise means for identifying a plurality of remote devices, each of which is linked to the apparatus, the apparatus being configured to move output to a selected one or more of the remote devices.

The apparatus may be configured to determine a distance between the apparatus and each of the plurality of remote devices, and to select the remote device which has the lowest distance to the apparatus.

The apparatus may be configured to determine that one of the first content or the second content comprises multi-channel or spatialized audio, and to select a plurality of the remote devices for outputting the multi-channel or spatialized audio.

The apparatus may be configured to select one or more of the remote devices based on their respective output capabilities.

The apparatus may be a smartphone or a tablet computer.

The remote device may be a television or monitor having a display which is larger or has a greater resolution than a display of the apparatus.

According to a second aspect, this specification describes a method, according to claim 11 of the appended set of claims.

The second window may be a picture-in-picture window.

The method may comprise moving output of at least part of the first content or at least part of the second content based on detecting that the apparatus does not comprise one or more output capabilities required to output at least part of the first content or at least part of the second content and that the remote device does comprise the one or more required output capabilities.

The method may comprise moving output of either the first window or the second window responsive to detecting that the first window is associated with a predetermined type of application.

The method may comprise detecting receipt of the user input by detecting selection of an interactive user interface element on the first window.

The method may comprise detecting receipt of the user input by means of detecting a predetermined movement, gesture or orientation of the apparatus.

The method may further comprise determining a distance between the apparatus and the remote device, wherein the method may comprise moving output of the first window or the second window responsive to detecting that the distance is below a predetermined threshold.

The method may further comprise determining a gaze direction of a user in relation to the user interface, wherein the method may comprise moving output of the first window or the second window responsive to detecting that the determined gaze direction corresponds to the first window and not to the second window.

The method may further comprise identifying one or more objects of interest in the first window, wherein the method may comprise moving output of the first window or the second window responsive to detecting that the second window at least partly overlies the one or more objects of interest.

The method may further comprise identifying one or more interactive user interface elements in the first window, wherein the method may comprise moving output of the first window or the second window responsive to detecting that the second window at least partly overlies the one or more interactive user interface elements.

The method may move output of the first window or the second window responsive to detecting that the second window is associated with a predetermined type of application or comprises a predetermined type of content for being output in an enlarged or full-screen mode.

The method may determine which of the first content or the second content to move output of based on predetermined user preference data or a received user interaction.

The method may determine which of the first content or the second content to move output of based on determining one or more output capabilities of the remote device and identifying which of the first content or the second content has output preferences or output requirements most closely corresponding to the determined one or more output capabilities.

The method may further comprise identifying a plurality of remote devices, each of which is linked to the apparatus, the method comprising moving output to a selected one or more of the remote devices.

The method may comprise determining a distance between the apparatus and each of the plurality of remote devices, and to select the remote device which has the lowest distance to the apparatus.

The method may comprise determining that one of the first content or the second content comprises multi-channel or spatialized audio, and selecting a plurality of the remote devices for outputting the multi-channel or spatialized audio.

The method may comprise selecting one or more of the remote devices based on their respective output capabilities.

The apparatus may be a smartphone or a tablet computer. The remote device may be a television or monitor having a display which is larger or has a greater resolution than a display of the apparatus.

According to a third aspect, this specification describes a computer-readable medium (such as a non-transitory computer-readable medium) comprising program instructions stored thereon for performing at least the following: outputting, on first device, a user interface comprising a first window associated with first content and a second window associated with second content, the second window at least partly overlying the first window; detecting one or more predetermined conditions associated with the user interface; and responsive to detecting the one or more predetermined conditions, moving output of at least part of the first content or at least part of the second content from the first device to a second device which is linked to the first device.

### Brief Description of Drawings

Example embodiments will now be described, by way of non-limiting example, with reference to the accompanying drawings, in which:
FIG. 1 is a schematic view of a first device and a second device which is linked to the first device;
FIG. 2A is a schematic view of the FIG. 1 first device and second device, wherein the first device provides a user interface comprising first and second windows;
FIG. 2B is a schematic view of the FIG. 1 first device and second device, wherein the first device provides a different user interface comprising first and second windows;
FIG. 3 is a flow diagram showing processing operations according to some example embodiments;
FIG. 4 is schematic view of the FIG. 1 first device linked to a plurality of second devices according to some example embodiments;
FIG. 5A is a schematic view similar to FIG. 1, wherein the first device provides a user interface comprising a first window showing first content and a second window showing second content;
FIG. 5B shows a subsequent state of the FIG. 5A first device user interface according to some example embodiments;
FIG. 6A is a schematic view similar to FIG. 1, wherein the first device provides a user interface comprising a first window showing first content and a second window showing second content;
FIG. 6B shows a subsequent state of the FIG. 6A first device user interface according to some example embodiments;
FIG. 7A is a schematic view similar to FIG. 1, wherein the first device provides a user interface comprising a first window showing first content and a second window showing second content;
FIG. 7B shows a subsequent state of the FIG. 7A first device user interface according to some example embodiments;
FIG. 7C shows a subsequent state of the FIG. 7B first device user interface according to some example embodiments;
FIG. 8 is schematic view of the FIG. 1 first device linked to a plurality of second devices according to some example embodiments;
FIG. 9 is schematic view of the FIG. 1 first device linked to a plurality of second devices according to some example embodiments in which a position of a second window may change based on movement of the first device;
FIG. 10A is a schematic view similar to FIG. 1, wherein the first device provides a user interface comprising a first window showing first content and a second window showing second content;
FIG. 10B shows a subsequent state of the FIG. 10A first device user interface according to some example embodiments;
FIG. 11 is a schematic view of an apparatus according to some example embodiments; and
FIG. 12 is a non-transitory computer-readable medium according to some example embodiments.

### Detailed Description

Example embodiments relate to apparatuses, methods and computer programs for moving output of content from a first device to a second device. The content may comprise audio content and/or video content.

The first device may comprise a user device having a display, i.e. a display device. The second device may comprise, for example, a display device and/or an audio device. The second device may be connected or connectable (linked) to the first device by means of, for example, a short-range communications channel.

Example embodiments may involve outputting, on a first device having a display screen, a user interface comprising at least a first window associated with first content and a second window associated with second content, the second window at least partly overlying the first window. A user interface may comprise video data that is displayed on a display screen of the first device. For example, a user interface may comprise a first window associated with a first application and a second window associated with a second application. The user interface may comprise an interactive background particular to, for example, an operating system of the first device. The first and second windows may be of different sizes or have the same size. The second window may only partially overlap the first window, such that some of the second window may be outside a boundary of the first window, or the second window may be smaller than the first window in terms of its spatial area and the entirety of the second window may overly the first window. This latter example may be referred to as a picture-in-picture (PIP) user interface whereby the second window may be referred to as a picture-in-picture window. Example embodiments may involve moving at least part of the first content or at least part of the second content from the first device to the second device which may provide one or more advantages set out below.

As described herein, a window may comprise a portion of a user interface for outputting associated content. The content may comprise video content (which may be static or moving image content), audio content or a combination of both. A window may comprise a rectangular portion of the user interface, but a window is not necessarily rectangular.

A window may be associated with a particular application. For example, a window may be associated with one or more of a web browser application, a video playing application, a music playing application, a presentation application, a word processing application, a document viewing application and a conference application, e.g. a videoconference application.

Upon selecting or executing a particular application, e.g. a web browser application, a first window may open on the user interface and the first window may show web browser content that a user may navigate in the usual way. Upon selecting another application, e.g. a video playing application, a second window may open on the user interface which shows video content which may be accompanied by audio content.

If the first device, by virtue of hardware, software (e.g. an operating system and/or some other application-level functionality), firmware or a combination thereof, is configured to provide a picture-in-picture user interface, the second window may comprise a picture-in-picture window which overlays the first window. This may occur automatically or in response to a user selection. In this way, a user is provided with continuity in terms of being able to simultaneously consume both the web browser content and the video content without, for example, having to switch between their associated windows or applications.

Example embodiments may provide improvements associated with using a picture-in-picture type of user interface based on utilising a second device, which is remote from the first device. The second device may have different technical characteristics and capabilities than the first device.

The first device may comprise a user device, being a device operable by one or more users and configured to transmit and receive data over a communications network. The term "user device" will be used hereafter.

A user device may comprise processing functionality for executing one or more applications, for example (but not limited to) one or more of a web browser application, a video playing application, a music playing application, a presentation application, a word processing application, a document viewing application and a conference application, e.g. a videoconference application.

A user device may also comprise one or more input modules and one or more output modules. For example, a user device may comprise one or more input transducers and one or more output transducers. For example, the one or more input transducers may comprise one or more microphones for converting sound waves to electrical signals which may be stored, processed and transmitted as audio data. For example, the one or more output transducers may comprise one or more loudspeakers for converting electrical signals into sound waves.

For example, the user device may also comprise one or more cameras for capturing video images which can be stored, processed and transmitted as video data. For example, a user device may comprise one or more displays, which may comprise any form of electronic display which may or may not be a touch-sensitive display. In the case of a touch-sensitive display, the display may also provide a form of input module, for example to receive and invoke selection commands based on detecting a touch input, for example corresponding to a particular user interface element being displayed by the touch-sensitive display.

The user device may also comprise one or more other input modules, such as one or more of an accelerometer and gyroscope (inertial sensors) for generating motion data from which can be determined motion characteristics of the user device. The user device may also comprise one or more positioning receivers, such as a Global Navigation Satellite System (GNSS) receiver, for determining the geographic position of the user device. Other positioning systems or methods may be used. For example, the user device may comprise a module such as Apple Inc.'s so-called U1 Ultra Wideband (UWB) chip which employs short-range radio signals for determining relatively precise positioning and distance measurements with respect to other UWB-enabled devices. For example, audio localization systems and methods may be used. Audio localisation may involve, for example, using an array of microphones to determine, based on one or more received audio signals from another device, the relative position and distance of the user device from the other device.

The user device may comprise, but is not limited to, a smartphone, a digital assistant, a digital music player, a personal computer, a laptop, a tablet computer or a wearable device such as a smartwatch. The user device may be capable of establishing a communication session with one or more other user devices via a communications network.

The user device may be configured to transmit and receive data using protocols for 3G, 4G, LTE, 5G or any future generation communication protocol. The user device may be configured to communicate over local or wide area networks using, e.g. WiFi. The user device may comprise means for short-range communications using, for example, Bluetooth, Zigbee or WiFi. The user device may comprise one or more antennas for communicating with external devices.

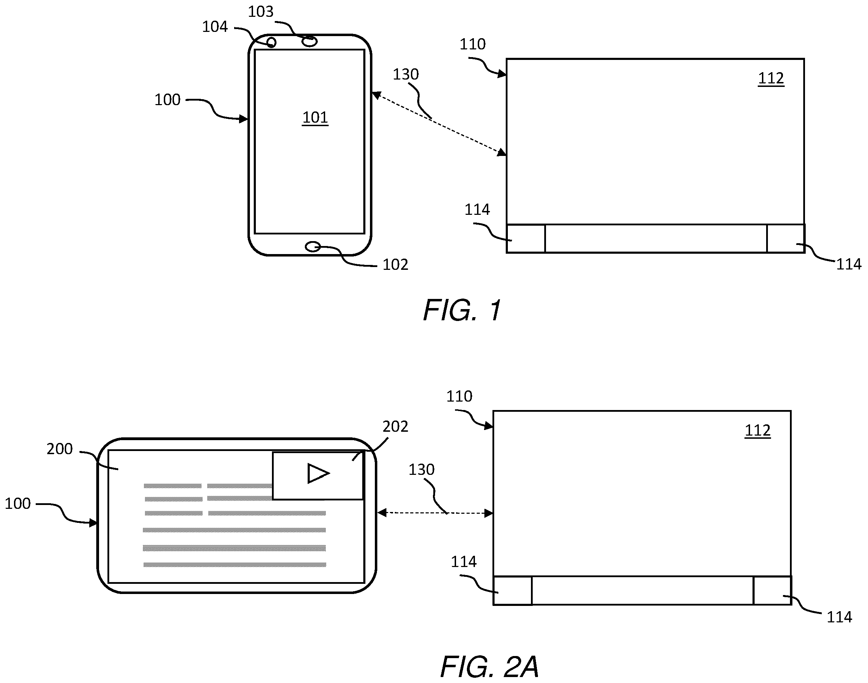

Referring to FIG. 1, an example user device 100 is shown in the form of a smartphone.

The user device 100 may comprise a touch-sensitive display screen (hereafter "display") 101, a microphone 102, a loudspeaker 103 and a front-facing camera 104. The user device 100 may additionally comprise a rear-facing camera (not shown) on its rear side. The front-facing camera 104 may be enabled during, for example, a video call or videoconference application whereby video data captured by the front-facing camera may be transmitted over the video call or videoconference session.

Also shown in FIG. 1 is a second device 110 which is linked to the user device 100. The second device 110 is hereafter referred to as a "linked device". The user device 100 and the linked device 110 are not shown to scale.

One or more other second devices (not shown) may be linked to the user device 100.

The term "linked" may mean that the linked device 110 is capable of data communications with the user device 100 over one or more short-range communications channels using one or more protocols such as, for example, Bluetooth, Zigbee or WiFi as part of a local area network (LAN). In the context of Bluetooth, the linked device 110 may be "paired" with the user device 100 in a conventional manner such that data may be transmitted between the user device and the linked device, and vice versa. However, it will be appreciated that other methods of establishing short-range communications channels may enable data transmissions between the user device 100 and the linked device 110.

The dashed line 130 shown in FIG. 1 may represent a short-range communications channel between the user device 100 and the linked device 110.

In some example embodiments, the linked device 110 may comprise a display device, i.e. a device having a display screen 112.

Such a linked device 110 may comprise, for example, one or more of a television, another smartphone, a digital assistant, a personal computer, a laptop, or a tablet computer, to give some examples.

In some embodiments, the linked device 110 may comprise an audio-only device, such as a network-enabled sound bar or speaker system.

Technical characteristics of the linked device 110 may be stored at, or accessible to, the user device 100, for example by being received at the time of pairing. The technical characteristics may indicate output capabilities of the linked device such as, but not limited to, display size and display resolution of the display screen 112.

The linked device 110 may also comprise one or more audio output transducers, e.g. loudspeakers 114, and an associated audio processing codec for processing audio data received from the user device 100 for output via the loudspeakers. As such, the user device 100 may store other technical characteristics of the linked device 110 indicative of audio output capabilities, such as capabilities for stereoscopic sound, 5.1 surround sound and/or spatialized sound.

The linked device 110 may have better output capabilities relative to the user device 100 and may be more optimal for outputting certain forms or content (e.g. video and/or audio content) relative to the user device 100.

For example, the display screen 112 of the linked device 110 may be technically more advanced than the display screen 101 of the user device 100. For example, the display screen 112 of the linked device 110 may have a greater size and/or resolution to that of the display screen 101 of the user device 100. For example, the display screen 112 of the linked device 110 may have a display size of approximately 90cm x 5o cm and a resolution of 3840 x 2160 pixels whereas the display screen 101 of the user device 100 may have a display size of approximately 15 cm x 8 cm and a resolution of 1792 x 896 pixels.

For example, the audio processing capabilities of the linked device 110 may be technically more advanced than those of the user device 100. For example, the audio processing capabilities of the linked device 110 may be configured to output stereo or even spatialized audio content whereas the user device 100 may only be configured to output monaural audio content.

FIG. 2A shows the FIG. 1 user device 100 and linked device 110 in operative use, which may be useful for understanding example embodiments to be described below.

The user device 100 may display a user interface comprising a first window 200 and a second window 202, the second window being a picture-in-picture window. The first window 200 may be associated with, for example, a web browser application and the second window 202 may be associated with, for example, a video playing application. The first content may comprise a web page and the second content may comprise video content in any suitable format. The second window 202 may be displayed responsive to a user executing the video playing application from a home screen, or from within the first window 200, e.g. by selecting a link forming part of the web page. In some cases, the second window 202 may be displayed automatically responsive to, for example, embedded content within the first content (web page) appearing in the first window 200. In some cases, the second window 202 may obscure some of the first content that the user is interested in. In some cases, the second window 202 may comprise second content which cannot be seen particularly well (e.g. a presentation) by a user because of its reduced size. In some cases, the first or the second content may not be output optimally due to technical limitations of the user device 100.

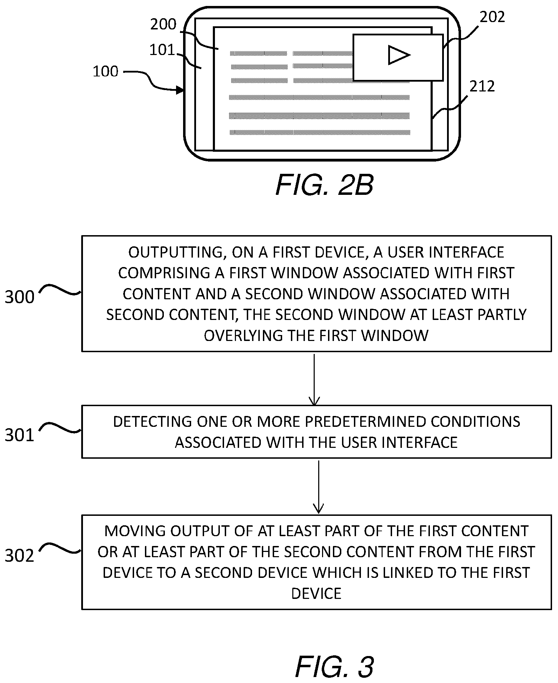

FIG. 2B shows the FIG. 1 user device 100 displaying an alternative user interface to that of FIG. 2A. In FIG. 2B, the second window 202 only partially overlaps the first window 200, such that some of the second window is outside a boundary 212 of the first window. Nevertheless, some of the first content of the first window 200 may be obscured by the second window 202. Therefore, although example embodiments may focus on the second window 202 being a picture-in-picture window, as in FIG. 2A, it should be appreciated that other example embodiments can provide a user interface based on FIG. 2B, as an example.

Example embodiments aim to provide improved systems and methods for outputting video and/or audio content in this context.

FIG. 3 is a flow diagram indicating processing operations that may be performed by the user device 100 according to one or more example embodiments. The processing operations may be performed by means of hardware, software, firmware or a combination thereof.

A first operation 300 may comprise outputting, on first device, a user interface comprising a first window associated with first content and a second window associated with second content, the second window at least partly overlying the first window.

A second operation 301 may comprise detecting one or more predetermined conditions associated with the user interface.

A third operation 302 may comprise moving output of at least part of the first content or at least part of the second content from the first device to a second device which is linked to the first device.

The third "moving" operation 302, in effect, may comprise stopping output on the first device of at least part of the first content or at least part of the second content and causing output of said stopped first content or second content on a second device which is linked to the first device.

In this way, the moved content may be output in a more optimal way which may also avoid important parts of the first content being obscured by the second window.

The first content may be audio content, video content or a combination of both audio and video content. Therefore, references to "at least part" in the third operation 302 may refer to moving only audio content or only video content of the first or the second content to the second device.

The one or more predetermined conditions referred to in the second operation 301 may be considered triggering operations for triggering the moving action. Examples of such predetermined conditions are described below.

For example, the user device 100 may be configured to move output of at least part of the first content or at least part of the second content based on detecting that the first device does not comprise one or more output capabilities required to output at least part of the first content or at least part of the second content and that the second device does comprise the one or more required output capabilities.

Referring to FIG. 2A, if the content associated with the second window 202 comprises a video clip having video and audio content, wherein the audio content is stereo or spatialized audio content, example embodiments may trigger movement of first or second content to the linked device 110 if the user device 100 cannot output stereo or spatialized audio content and the linked device 110 can. The content that is moved to the linked device 110 may only be the audio content, whereas the video content may still be output in the second window 202 of the user device 100. This may allow the user to control the second window 202 using the user device 100, e.g. to select user interface elements such as pause, rewind or fast forward. Alternatively, the second window 202 may also move to the linked device 110 so that the video content is output by the linked device. As another example, if the video in the second window 202 is optimized for display at a particular resolution which is greater than that which can be output by the display screen 101 of the user device 100, this may trigger movement of at least the video content to the linked device 110. This may be on the basis that the display screen 112 of the linked device 110 is capable of outputting video content at the particular resolution (or at least at a better resolution) than that of the user device 100.

In some embodiments, the user device 100 may be configured to move output of either the first window 200 or the second window 202 to the linked device 110.

For example, the user device 100 may be configured to move output of either the first window 200 or the second window 202 responsive to the user device detecting that the first window is associated with a predetermined type of application.

For example, the user device 100 may store a set of reference data indicative of one or more types of applications for triggering movement. For example, the one or more types of application may comprise one or more of a video playing application, a music playing application, a presentation application, a word processing application, a document viewing application and a conference application, e.g. a videoconference application. The reference data may be provided by default and/or may be entered and/or updated by user action.

For example, the user device 100 may be configured to move output of either the first window 200 or the second window 202 responsive to the user device detecting that the first window comprises a predetermined type of content for being output in an enlarged or full-screen mode. In this way, it is the content rather than the application associated with the respective first and second windows 200, 202 that may trigger the moving action. The content may, for example, comprise one or more of an image, an audio track, a video and a presentation slide. By triggering the moving action based on content, rather than application type, it is possible to trigger movement in situations such as when an audio track, video or presentation is embedded within other content, such as within a webpage. When a user scrolls down a webpage, a link or embedded file may appear which may be appropriate for triggering movement of content. The content may be associated with metadata indicative that the content may be viewed in an enlarged or full-screen mode or an appropriate "maximize" icon may be identified from the code or from the image data.

The user device 100 is configured to move output of either the first window 200 or the second window 202 upon detecting receipt of a user input for triggering output of, for example, the first content in an enlarged or full-screen mode. Detecting a user input may be detected by means of detecting selection of an interactive user interface element on the first window 200. Alternatively, or additionally, the user input may be detected by means of detecting a predetermined movement, gesture or orientation of the user device 100. For example, detecting selection of a "maximise" button or detecting re-orienting of the user device 100 from a portrait orientation to a landscape orientation may trigger output of the first content in an enlarged or full-screen mode.

In order to trigger movement of the first or second window 200, 202, one or more further predetermined conditions may be required in addition to those mentioned above.

For example, the user device 100 may be configured to determine a distance between the user device and the linked device 110. The user device 100 may be configured to move output of the first window 200 or the second window 202 responsive to detecting that the distance is below a predetermined threshold. This may ensure that movement is not triggered if the linked device 110 is far away from the user, e.g. in another room. Use of any of the above-mentioned position detecting methods may be used for this purpose.

For example, the user device 100 may be configured to determine a gaze direction of a user in relation to the user interface. The user device 100 may be configured to move output of the first window 200 or the second window 202 responsive to detecting that the gaze direction corresponds to the first window and not to the second window. This may ensure that movement of, for example, the second window 202 is not triggered if the user is in fact looking towards the second window.

For example, the user device 100 may be configured to identify one or more objects of interest in the first window 200. The user device 100 may be configured to move output of the first window 200 or the second window 202 responsive to detecting that the second window at least partly overlies the one or more objects of interest. This may ensure that movement of, for example, the second window 202 is not triggered if it does not, in fact, obscure interesting content in the first window 200.

For example, the user device 100 may be configured to identify one or more interactive user interface elements in the first window 200. The user device 100 may be configured to move output of the first window 200 or the second window 202 responsive to detecting that the second window at least partly overlies the one or more interactive user interface elements. This may ensure that movement of, for example, the second window 202 is not triggered if it does not prevent a user from interacting with content shown in the first window 200.

In the above examples, the one or more predetermined conditions may relate particularly (though not exclusively) to moving either the first window 200 or the second window 202 based on the application or content associated with the first window.

In some example embodiments, movement of either the first window 200 or the second window 202 may be based on the application or content associated with the second window 202. For example, the user device 100 may be configured to detect that the second window 202 is associated with a predetermined type of application and/or a predetermined type of content in the manner described above and, responsive thereto, may trigger movement in the manner described above.

In some example embodiments, the user device 100 may be configured to determine which of the first window 200 or the second window 202 to move based on predetermined user preference data or a received user interaction.

For example, the user device 100 may store a set of user preference data indicative that the second window 202 is to be moved to the linked device 110 in the event of detecting one or more of the above predetermined conditions.

For example, the preference data may indicate that a window associated with image or video content is to be moved to the linked device 110, if a display device, whereas non-image or video content is not to be moved.

For example, the user device 100 may determine which of the first window 200 or the second window 202 to move based on determining one or more output capabilities of the linked device 110 and identifying which of the first content or the second content has output requirements most closely corresponding to the determined one or more output capabilities.

For example, if the linked device 110 is configured to output video content and spatial audio content, then the user device 100 may select to move the second window 202 to the linked device if the second content comprises spatial audio content.

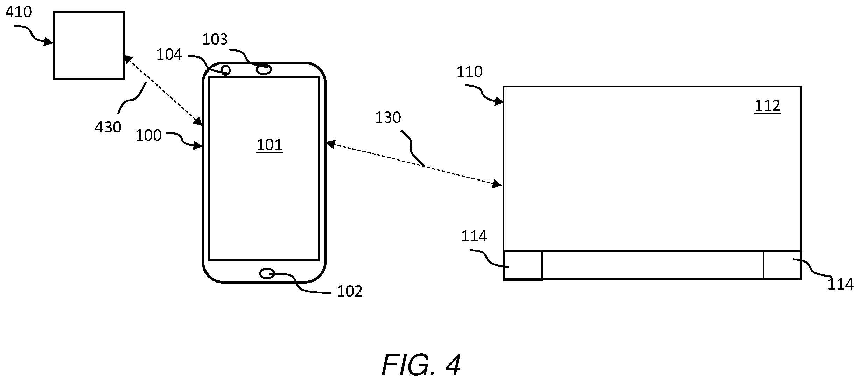

Referring to FIG. 4, a plurality of linked devices 110, 410 may be linked to the user device 100 via respective short-range communications channels 130, 430. A first linked device 110 and a second linked device 410 are shown.

Example embodiments may also comprise the user device 100 moving output of at least part of the first content or at least part of the second content to a selected one of the first and second linked devices 110, 410. As such, the user device 100 may be configured to identify the plurality of linked devices 110, 410, each of which is linked to the user device 100, and to move output to a selected one or more of the linked devices.

For example, the user device 100 may be configured to determine a distance between the user device and each of the first and second linked devices 110, 410. The user device 100 may then select one of the first and second linked devices 110, 410 which has the lowest distance to the user device.

Alternatively, or additionally, the user device 100 may select one of the first and second linked devices 110, 410 based on an orientation or direction that the user device 100 is facing. The user device 100 may be configured by means of its accelerometers and/or gyroscopes to determine its orientation which may be indicative of the direction the user is facing. If, for example, it is determined that the user device 100 is facing more towards the second linked device 410 than the first linked device 110, then the second linked device may be selected over the first linked device.

Alternatively, or additionally, the user device 100 may select one of the first and second linked devices 110, 410 based on their respective output capabilities. For example, as in the above example with reference to FIG. 2A, if the video clip in the second window 202 comprises video and audio content, wherein the audio content is multi-channel or spatialized audio content, this may trigger movement of content to the second linked device 410 rather than to the first linked device 110 if the second linked device is best configured for outputting spatialized audio content.

This is but one example, but it will be appreciated that, by the user device 100 storing data indicative of the output capabilities of the first and second linked devices 110, 410, an intelligent selection of which linked device to utilise for outputting particular types of moved content can be made to provide an optimal user experience.

Alternatively, or additionally, the user device 100 may be configured to determine that one of the first content or the second content comprises multi-channel or spatialized audio, and to select both of the first and second linked devices 110, 410 for outputting the multi-channel or spatialized audio. For example, if the audio content is stereo or spatialized audio, audio transducers of the first and second linked devices may receive respective channels of the audio content.

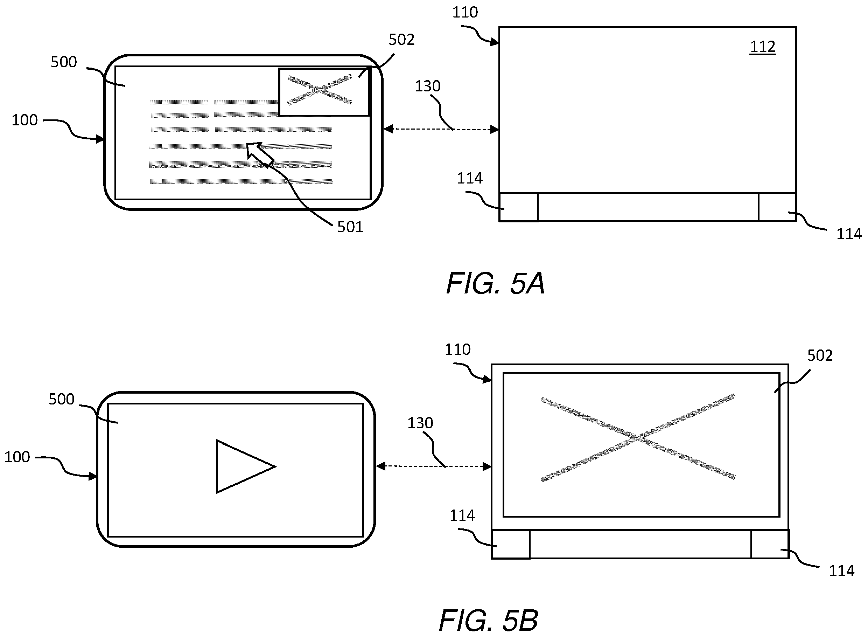

Further example embodiments will now be described with reference to FIGs. 5 - 10, which illustrate example use cases that the user device 100 may be configured to provide.

Referring to FIG. 5A, the user device 100 may provide a first window 500 associated with a web page and a second window 502 associated with other content, for example an image. Responsive to one or more of the above predetermined conditions, e.g. selection of a link associated with a video clip by means of a touch input or cursor 501, the user device 100 may move the second window 502 to the linked device 110 as shown in FIG. 5B. This determination may be on the basis that the video clip is to be played by a video playing application and/or comprises a predetermined type of content to be viewed in an enlarged or full-screen mode.

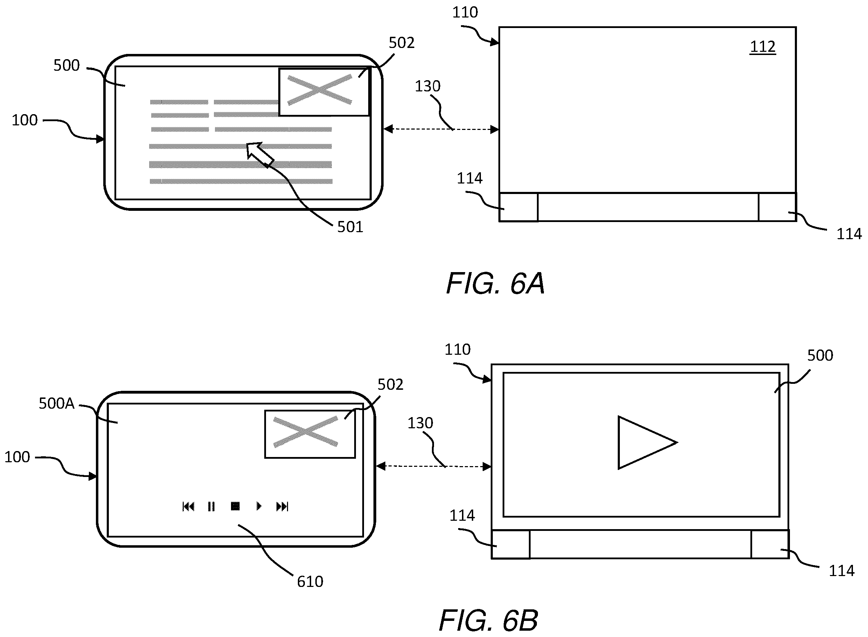

Referring to FIG. 6A, which is similar to FIG. 5A, the user device 100 may provide a first window 500 associated with a web page and a second window 502 associated with other content, for example an image. Responsive to one or more of the above predetermined conditions, e.g. selection of a link associated with a video clip by means of a touch input or cursor 501, the user device 100 may move the first window 500 to the linked device 110 as shown in FIG. 6B. The first window 500 may be replaced with a new window 600A which may comprise one or more user interface elements 610, for example to enable control of the video content when played to the linked device 110. Audio content associated with the video may also move to the linked device 110.

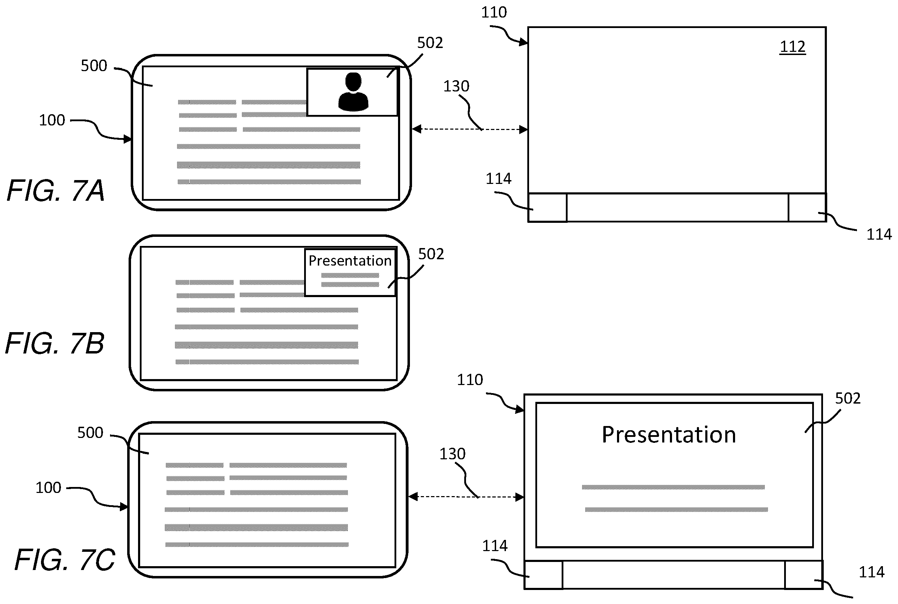

Referring to FIG. 7A, which is similar to FIG. 5A, the user device 100 may provide a first window 500 associated with a web page and a second window 502 associated with other content, for example a videoconference. Responsive to one or more of the above predetermined conditions, in this case based on the second content, e.g. determining updated content in the second window 502 in the form a presentation, for which see an intermediate representation in FIG. 7B, the user device 100 may move the second window 502 to the linked device 110 as shown in FIG. 7C. Once the presentation is complete, the user interface may revert to the FIG. 7A situation.

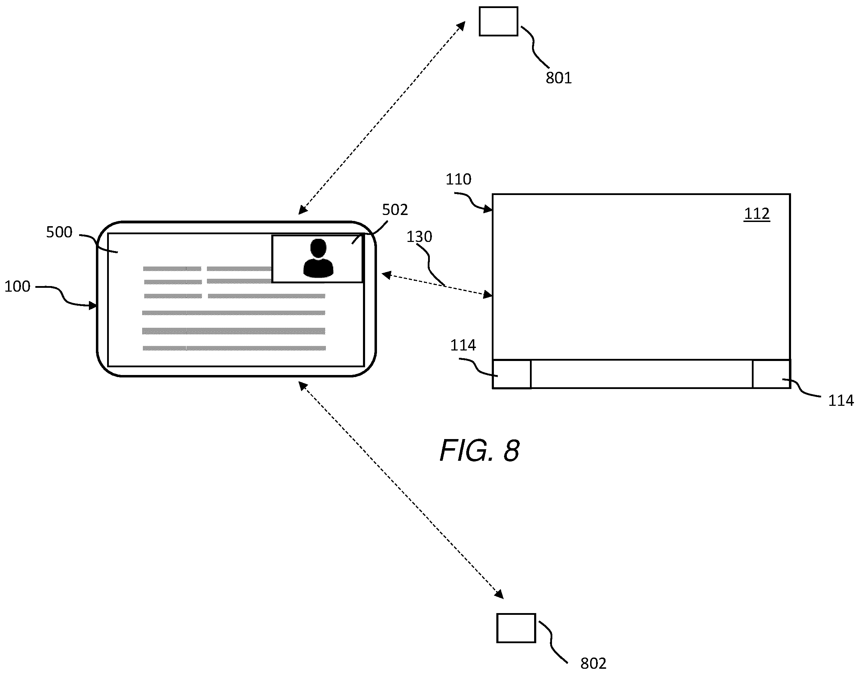

Referring to FIG. 8, the user device 100 may be linked to first, second and third linked devices 110, 801, 802. Responsive to opening or selecting content for output in the second window 502, for example, the user device 100 may determine that the content comprises spatialized audio content and that the user device cannot output such spatialized audio content. Additionally, the user device 100 may determine that it is not connected to a peripheral such as a pair of earphones capable of outputting spatialized audio content. Accordingly, the user device 100 may determine to move respective channels of the spatialized audio to different ones of the first, second and third linked devices 110, 801, 802.

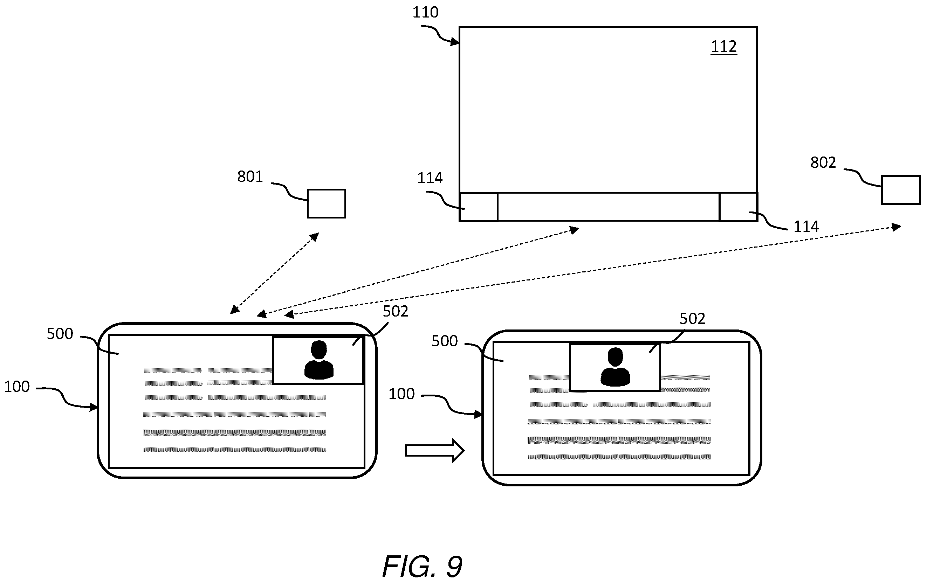

Referring to FIG. 9, which may follow-on from FIG. 8, the user device 100 may further determine that the position of the user device (see left hand image) is not optimal for one or more directional components of the spatial audio from the first, second and third linked devices 110, 801, 802. An indication of an optimal position may be provided by means of appropriate positioning of the second window 502 as shown. The right hand image shows how the re-positioned second window 502 can indicate an optimal position.

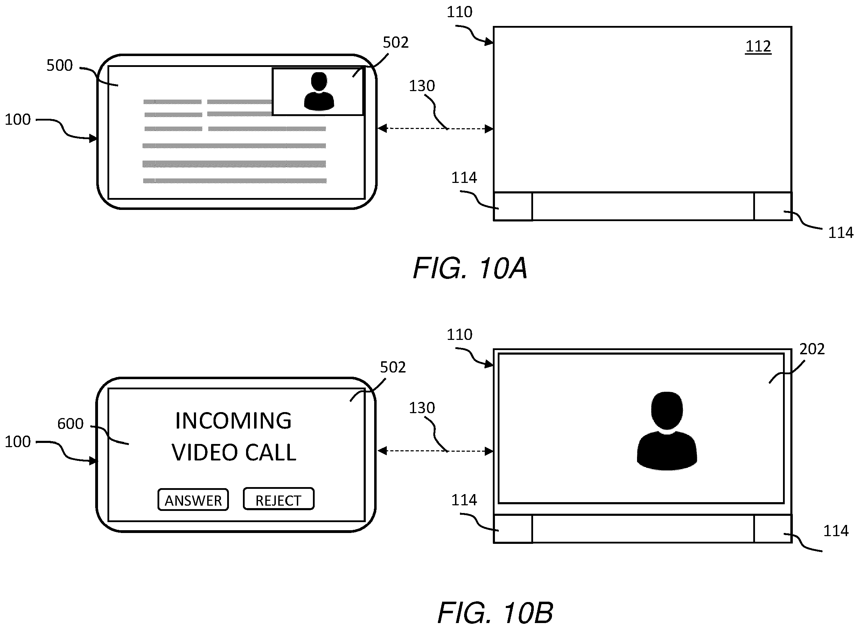

Referring to FIG. 10A, which is similar to FIG. 7A, the user device 100 may further determine a condition that a video call is incoming, as shown in FIG. 10B whereby a third window 600 replaces or overlays the first window 500. The user device 100 may move the second window 502 on the basis that the second window 502 is associated with video and audio content and that use of the user device's audio output capabilities is required for the video call. In some embodiments, the moving may occur only if the video call is accepted.

In all above embodiments, moving of content may be temporary. For example, where content comprises an audio or video track, the movement of the content may be output on one or more linked devices for the duration of the audio or video track, and may thereafter revert back to the user device. For example, where content comprises a mix of, for example a web page and embedded video or audio content, only the video or audio content may be moved, so that the user can continue to browse the web page which remains in its original window.

### Example Apparatus

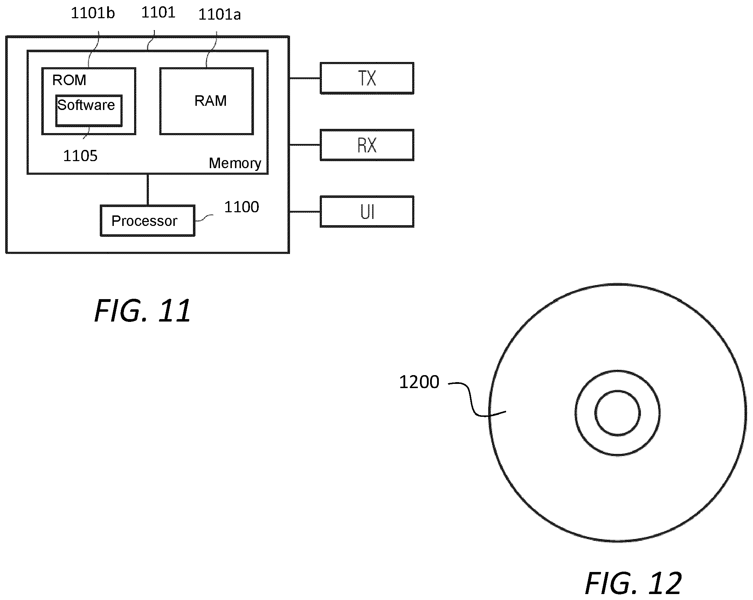

FIG. 11 shows an apparatus according to an embodiment, which may comprise the user device 100, or components thereof. The apparatus may be configured to perform the operations described herein, for example operations described with reference to any preceding process, e.g. with reference to FIG. 3. The apparatus comprises at least one processor 1100 and at least one memory 1101 directly or closely connected to the processor. The memory 1101 includes at least one random access memory (RAM) 1101a and at least one read-only memory (ROM) 1101b. Computer program code (software) 1105 is stored in the ROM 1101b. The apparatus may be connected to a transmitter (TX) and a receiver (RX). The apparatus may, optionally, be connected with a user interface (UI) for instructing the apparatus and/or for outputting data. The at least one processor 1100, with the at least one memory 1101 and the computer program code 1105 are arranged to cause the apparatus to at least perform at least the method according to any preceding process.

FIG. 12 shows a non-transitory media 1200 according to some embodiments. The non-transitory media 1200 is a computer readable storage medium. It may be e.g. a CD, a DVD, a USB stick, a blue ray disk, etc. The non-transitory media 1200 stores computer program code, causing an apparatus to perform the method of any preceding process.

Names of network elements, protocols, and methods are based on current standards. In other versions or other technologies, the names of these network elements and/or protocols and/or methods may be different, as long as they provide a corresponding functionality. For example, embodiments may be deployed in 2G/ 3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus (100) comprising:
a display (101);
means for establishing a short-range communications channel (130) with one or more remote devices (110);
means configured to:
output, on the display (101) of the apparatus, a user interface comprising a first window (500), associated with first content and a second window (502) associated with second content, the second window at least partly overlying the first window;
detect that the first window or the second window comprises a predetermined type of content for being output in an enlarged or full-screen mode; and
responsive to receipt of user input for triggering output of the first content or the second content in the enlarged or full-screen mode, move output of either the first window or the second window from the display of the apparatus to a display screen (112) of a remote device (110) which is linked to the apparatus by a short-range communications channel (130).

2. The apparatus of claim 1, wherein the second window is a picture-in-picture window.

3. The apparatus of claim 1 or claim 2, wherein the apparatus is further configured to determine one or more output capabilities of the remote device and to move output of the first window or the second window based on detecting that the apparatus does not comprise one or more output capabilities required to output the first window or the second window and that the remote device does comprise the one or more required output capabilities.

4. The apparatus of claim 1 or claim 2, wherein the apparatus is further configured to move output of either the first window or the second window responsive to detecting that the first window is associated with a predetermined type of application.

5. The apparatus of any preceding claim, wherein the detecting means is configured to detect receipt of the user input by means of detecting selection of an interactive user interface element on the first window.

6. The apparatus of any preceding claim, wherein the detecting means is configured to detect receipt of the user input by means of detecting a predetermined movement or gesture or orientation of the apparatus.

7. The apparatus of any preceding claim, further comprising means for determining a distance between the apparatus and the remote device, wherein the apparatus is further configured to move output of the first window or the second window responsive to the detecting that the distance is below a predetermined threshold.

8. The apparatus of claim 1, wherein the apparatus is further configured to determine one or more output capabilities of the remote device and to determine which of the first window or the second window to move output of based on identifying which of the first window and the second window has output preferences or output requirements most closely corresponding to the determined one or more output capabilities.

9. The apparatus of any preceding claim, further comprising means for identifying a plurality of remote devices, each of which is linked to the apparatus, the apparatus further being configured to move output of the first window or the second window to a selected one or more of the remote devices.

10. The apparatus of claim 9, wherein the apparatus is further configured to determine one or more output capabilities of the remote devices and to select one or more of the remote devices based on their respective output capabilities for outputting the first window or the second window.

11. A method of moving output of content from a first device (100) to a remote device (110) which is linked to the first device (100) by a short-range communications channel (130), the method comprising:
outputting (300), on a display (101) of the first device, a user interface comprising a first window (500) associated with first content and a second window (502) associated with second content, the second window at least partly overlying the first window;
detecting (301) that the first window or the second window comprises a predetermined type of content for being output in an enlarged or full-screen mode; and
responsive to receipt of the user input for triggering output of the first content or the second content in the enlarged or full-screen mode, moving (302) output of the first window or the second window from the display (101) of the first device (100) to display screen (112) of the remote device (110).

12. A non-transitory computer-readable medium, comprising program instructions stored thereon which, when executed by at least one processor of an apparatus (100) according to any one of claims 1-10, cause the apparatus to perform the method according to claim 11.

## Patentansprüche

1. Einrichtung (100), die Folgendes umfasst:
eine Anzeige (101);
Mittel zum Einrichten eines Kurzbereichskommunikationskanals (130) mit einer oder mehreren entfernten Vorrichtungen (110);
Mittel, die zu Folgendem ausgelegt sind:
Ausgeben einer Benutzerschnittstelle, die ein erstes Fenster (500), das mit einem ersten Inhalt verknüpft ist, und ein zweites Fenster (502), das mit einem zweiten Inhalt verknüpft ist, umfasst, auf der Anzeige (101) der Einrichtung, wobei das zweite Fenster das erste Fenster mindestens teilweise überlagert;
Detektieren, dass das erste Fenster oder das zweite Fenster eine vorbestimmte Art von Inhalt umfasst, der in einem Modus eines vergrößerten oder eines Vollbildschirms auszugeben ist; und
in Reaktion auf den Empfang einer Benutzereingabe zum Auslösen einer Ausgabe des ersten Inhalts oder des zweiten Inhalts im Modus für den vergrößerten oder den Vollbildschirm Verschieben einer Ausgabe entweder des ersten Fensters oder des zweiten Fensters von der Anzeige der Einrichtung zu einem Anzeigebildschirm (112) einer entfernten Vorrichtung (110), die über einen Kurzbereichskommunikationskanal (130) mit der Einrichtung verbunden ist.

2. Einrichtung nach Anspruch 1, wobei das zweite Fenster ein Bild-in-Bild-Fenster ist.

3. Einrichtung nach Anspruch 1 oder Anspruch 2, wobei die Einrichtung ferner dazu ausgelegt ist, eine oder mehrere Ausgabefähigkeiten der entfernten Vorrichtung zu bestimmen und eine Ausgabe des ersten Fensters oder des zweiten Fensters auf Basis des Detektierens zu verschieben, dass die Einrichtung nicht eine oder mehrere Ausgabefähigkeiten umfasst, die erforderlich sind, um das erste Fenster oder das zweite Fenster auszugeben, und dass die entfernte Vorrichtung die eine oder die mehreren erforderlichen Ausgabefähigkeiten umfasst.

4. Einrichtung nach Anspruch 1 oder Anspruch **2,** wobei die Einrichtung ferner dazu ausgelegt ist, eine Ausgabe entweder des ersten Fensters oder des zweiten Fensters in Reaktion auf das Detektieren, dass das erste Fenster mit einer vorbestimmten Art einer Anwendung verknüpft ist, zu verschieben.

5. Einrichtung nach einem der vorhergehenden Ansprüche, wobei die Detektionsmittel dazu ausgelegt sind, einen Empfang der Benutzereingabe mittels des Detektierens einer Auswahl eines interaktiven Benutzerschnittstellenelements im ersten Fenster zu detektieren.

6. Einrichtung nach einem der vorhergehenden Ansprüche, wobei die Detektionsmittel dazu ausgelegt sind, einen Empfang der Benutzereingabe mittels des Detektierens einer vorbestimmten Bewegung oder Geste oder einer Ausrichtung der Einrichtung zu detektieren.

7. Einrichtung nach einem der vorhergehenden Ansprüche, die ferner Mittel zum Bestimmen eines Abstands zwischen der Einrichtung und der entfernten Vorrichtung umfasst, wobei die Einrichtung ferner dazu ausgelegt ist, eine Ausgabe des ersten Fensters oder des zweiten Fensters in Reaktion auf das Detektieren, dass der Abstand unter einem vorbestimmten Schwellwert liegt, zu verschieben.

8. Einrichtung nach Anspruch 1, wobei die Einrichtung ferner dazu ausgelegt ist, eine oder mehrere Fähigkeiten der entfernten Vorrichtung zu bestimmen, und auf Basis des Identifizierens, welches des ersten Fensters und des zweiten Fensters Ausgabepräferenzen oder Ausgabeanforderungen aufweist, die der einen oder den mehreren bestimmten Ausgabefähigkeiten am nächsten entsprechen, zu bestimmen, die Ausgabe welches des ersten Fensters oder des zweiten Fensters zu verschieben ist.

9. Einrichtung nach einem der vorhergehenden Ansprüche, die ferner Mittel zum Identifizieren einer Vielzahl von entfernten Vorrichtungen umfasst, von denen jede mit der Einrichtung verbunden ist, wobei die Einrichtung ferner dazu ausgelegt ist, eine Ausgabe des ersten Fensters oder des zweiten Fensters zu einer oder mehreren ausgewählten der entfernten Vorrichtungen zu verschieben.

10. Einrichtung nach Anspruch 9, wobei die Einrichtung ferner dazu ausgelegt ist, eine oder mehrere Ausgabefähigkeiten der entfernten Vorrichtungen zu bestimmen und auf Basis von deren jeweiligen Ausgabefähigkeiten zum Ausgeben des ersten Fensters oder des zweiten Fensters eine oder mehrere der entfernten Vorrichtungen auszuwählen.

11. Verfahren zum Verschieben einer Ausgabe eines Inhalts von einer ersten Vorrichtung (100) zu einer entfernten Vorrichtung (110), die mit der ersten Vorrichtung (100) über einen Kurzbereichskommunikationskanal (130) verbunden ist, wobei das Verfahren Folgendes umfasst:
Ausgeben (300) einer Benutzerschnittstelle, die ein erstes Fenster (500), das mit einem ersten Inhalt verknüpft ist, und ein zweites Fenster (502), das mit einem zweiten Inhalt verknüpft ist, umfasst, auf einer Anzeige (101) der ersten Vorrichtung, wobei das zweite Fenster das erste Fenster mindestens teilweise überlagert;
Detektieren (301), dass das erste Fenster oder das zweite Fenster eine vorbestimmte Art von Inhalt umfasst, der in einem Modus eines vergrößerten oder eines Vollbildschirms auszugeben ist; und
in Reaktion auf den Empfang der Benutzereingabe zum Auslösen einer Ausgabe des ersten Inhalts oder des zweiten Inhalts im Modus für den vergrößerten oder den Vollbildschirm Verschieben (302) einer Ausgabe des ersten Fensters oder des zweiten Fensters von der Anzeige (101) der ersten Vorrichtung (100) zu einem Anzeigebildschirm (112) der entfernten Vorrichtung (110).

12. Nichttransitorisches computerlesbares Medium, das darauf gespeicherte Programmanweisungen umfasst, die, wenn sie von mindestens einem Prozessor einer Einrichtung (100) nach einem der Ansprüche 1 bis 10 ausgeführt werden, die Einrichtung veranlassen, das Verfahren nach Anspruch 11 durchzuführen.

## Revendications

1. Appareil (100) comprenant :
un affichage (101) ;
des moyens pour établir un canal de communication à courte portée (130) avec un ou plusieurs dispositifs distants (110) ;
des moyens configurés pour :
sur l'affichage (101) de l'appareil, produire une interface utilisateur comprenant une première fenêtre (500) associée à un premier contenu et une deuxième fenêtre (502) associée à un deuxième contenu, la deuxième fenêtre chevauchant au moins partiellement la première fenêtre ;
détecter que la première fenêtre ou la deuxième fenêtre comprend un type prédéterminé de contenu à produire en mode agrandi ou plein écran ; et
en réponse à la réception d'une entrée utilisateur pour déclencher la sortie du premier contenu ou du deuxième contenu en mode agrandi ou plein écran, déplacer la sortie de la première fenêtre ou de la deuxième fenêtre depuis l'affichage de l'appareil vers un écran d'affichage (112) d'un dispositif distant (110) qui est relié à l'appareil par un canal de communication à courte portée (130).

2. Appareil selon la revendication 1, dans lequel la deuxième fenêtre est une fenêtre image dans l'image.

3. Appareil selon la revendication 1 ou 2, dans lequel l'appareil est en outre configuré pour déterminer une ou plusieurs capacités de sortie du dispositif distant, et pour déplacer la sortie de la première fenêtre ou de la deuxième fenêtre lorsqu'il est détecté que l'appareil ne comprend pas une ou plusieurs capacités de sortie requises pour produire la première fenêtre ou la deuxième fenêtre et que le dispositif distant comprend bien les une ou plusieurs capacités de sortie requises.

4. Appareil selon la revendication 1 ou **2,** dans lequel l'appareil est en outre configuré pour déplacer la sortie de la première fenêtre ou de la deuxième fenêtre en réponse à la détection de **l'association** de la première fenêtre à un type prédéterminé d'application.

5. Appareil selon l'une des revendications précédentes, dans lequel les moyens de détection sont configurés pour détecter la réception de l'entrée utilisateur au moyen de la détection d'une sélection d'un élément d'interface utilisateur interactif sur la première fenêtre.

6. Appareil selon l'une des revendications précédentes, dans lequel les moyens de détection sont configurés pour détecter la réception de l'entrée utilisateur au moyen de la détection d'un déplacement, d'un geste ou d'une orientation prédéterminé(e) de l'appareil.

7. Appareil selon l'une des revendications précédentes, comprenant en outre des moyens pour déterminer une distance entre l'appareil et le dispositif distant, dans lequel l'appareil est en outre configuré pour déplacer la sortie de la première fenêtre ou de la deuxième fenêtre en réponse à la détection du fait que la distance est en dessous d'un seuil prédéterminé.

8. Appareil selon la revendication l dans lequel l'appareil est en outre configuré pour déterminer une ou plusieurs capacités de sortie du dispositif distant, et pour déterminer celle parmi la première fenêtre et la deuxième fenêtre dont il faut déplacer la sortie en fonction de l'identification de celle parmi la première fenêtre et la deuxième fenêtre dont les préférences de sortie ou les exigences de sortie correspondent le plus étroitement aux une ou plusieurs capacités de sortie déterminées.

9. Appareil selon l'une des revendications précédentes, comprenant en outre des moyens pour identifier une pluralité de dispositifs distants dont chacun est relié à l'appareil, l'appareil étant en outre configuré pour déplacer la sortie de la première fenêtre ou de la deuxième fenêtre vers un ou plusieurs dispositifs distants sélectionnés des dispositifs distants.

10. Appareil selon la revendication 9, dans lequel l'appareil est en outre configuré pour déterminer une ou plusieurs capacités de sortie des dispositifs distants, et pour sélectionner un ou plusieurs des dispositifs distants sur la base de leurs capacités de sortie respectives pour produire la première fenêtre ou la deuxième fenêtre.

11. Procédé de déplacement d'une sortie de contenu depuis un premier dispositif (100) vers un dispositif distant (110) qui est relié au premier dispositif (100) par un canal de communication à courte portée (130), le procédé comprenant les étapes suivantes :
sur un affichage (101) du premier dispositif, produire (300) une interface utilisateur comprenant une première fenêtre (500) associée à un premier contenu et une deuxième fenêtre (502) associée à un deuxième contenu, la deuxième fenêtre chevauchant au moins partiellement la première fenêtre ;
détecter (301) que la première fenêtre ou la deuxième fenêtre comprend un type prédéterminé de contenu à produire en mode agrandi ou plein écran ; et
en réponse à la réception de l'entrée utilisateur pour déclencher la sortie du premier contenu ou du deuxième contenu en mode agrandi ou plein écran, déplacer (302) la sortie de la première fenêtre ou de la deuxième fenêtre depuis l'affichage (101) du premier dispositif (100) vers un écran d'affichage (112) du dispositif distant (110).

12. Support non transitoire lisible par ordinateur, comprenant des instructions de programme stockés sur celui-ci qui, lorsqu'elles sont exécutées par au moins un processeur d'un appareil (100) selon d'une des revendications 1 à 10, amènent l'appareil à effectuer le procédé selon la revendication 11.
